# EUROPEAN PATENT APPLICATION

(11) **EP 4 753 208 A1**
(43) Date of publication of application: **03.06.2026**
(21) Application number: 24813090.8
(22) Date of filing: 27.09.2024
(51) Int. Cl.: H04L 9/40, H04L 69/22, H04L 12/46, H04L 45/00, H04L 45/745

(54) **PACKET PROCESSING METHOD AND APPARATUS, AND DEVICE**

(71) Applicant: New H3C Security Technologies Co., Ltd., Hefei, Anhui 230088 (CN)
(72) Inventor: DONG, Wei, Beijing 100102 (CN)
(74) Representative: 2SPL Patentanwälte PartG mbB
(86) International application number: PCT/CN2024/121733
(87) International publication number: WO 2026/065100

(57) **Abstract**

The present disclosure provides a message processing method, apparatus and device, the method including: obtaining a first data message, where the first data message includes a segment routing header and a first inner-layer message, the segment routing header includes a main path, and the main path includes first device information of a first security device; obtaining a first network tag corresponding to the first device information included in the main path; sending, based on the first network tag, a second inner-layer message corresponding to the first inner-layer message to the first security device, to cause the first security device to perform a security detection processing on the received second inner-layer message based on the first network tag; obtaining, in response to receiving a third inner-layer message returned by the last first security device in the main path, a second data message by encapsulating, based on the third inner-layer message, a segment routing header from which the main path is removed; and sending the second data message based on a segment routing header of the second data message. Through the solution of the present disclosure, the data message may be safely detected and processed by the security device.

## Description

### TECHNICAL FIELD

The present disclosure relates to the field of communication technologies, and in particular to message processing methods, apparatuses and devices.

### BACKGROUND

Segment routing is an extended source routing technology, and segment routing policy is a tunnel steering technology built based on segment routing technology. After receiving a data message, a head-end node encapsulates a segment routing header for the data message, and the segment routing header includes a segment routing list, which includes an IPv6 address of each node on a specific path, and each node on the specific path forwards the data message based on the segment routing header, thus guiding the data message to be forwarded according to the specific path through the segment routing list, and realizing traffic engineering.

However, after receiving the data message, each node may only forward the data message to the next node on the specific path based on the segment routing header. For a security device that does not support segment routing, each node cannot send the data message to the security device, such as a security device supporting Distributed Denial of Service (DDoS) protection, Web Application Firewall (WAF), firewalls, intrusion prevention systems, and other functionalities. This results in the inability to perform security inspection and processing on the data message, potentially allowing unsafe data messages to be transmitted within the network.

### SUMMARY

The present disclosure provides a message processing method, which is performed by a network device and including:
obtaining a first data message, where the first data message includes a segment routing header and a first inner-layer message, the segment routing header includes a main path, and the main path includes first device information of a first security device corresponding to a security detection required by the first data message;
obtaining a first network tag corresponding to the first device information included in the main path;
sending, based on the first network tag, a second inner-layer message corresponding to the first inner-layer message to the first security device, to cause the first security device to perform a security detection processing on the received second inner-layer message based on the first network tag;
obtaining, in response to receiving a third inner-layer message returned by the last first security device in the main path, a second data message by encapsulating, based on the third inner-layer message, a segment routing header from which the main path is removed; and sending the second data message based on a segment routing header of the second data message.

The present disclosure provides a message processing apparatus, which is applied to a network device and including:
an obtaining module, to obtain a first data message, where the first data message includes a segment routing header and a first inner-layer message, where the segment routing header includes a main path, and the main path includes first device information of a first security device corresponding to a security detection required by the first data message; and obtain a first network tag corresponding to the first device information included in the main path;
a processing module, to send, based on the first network tag, a second inner-layer message corresponding to the first inner-layer message to the first security device, to cause the first security device to perform security detection processing on the received second inner-layer message based on the first network tag; and obtain, in response to receiving a third inner-layer message returned by the last first security device in the main path, a second data message by encapsulating, based on the third inner-layer message, a segment routing header from which the main path is removed; and a sending module, to send the second data message based on a segment routing header of the second data message.

The present disclosure provides a network device, including a processor and a machine-readable storage medium, where the machine-readable storage medium stores machine-executable instructions executable by the processor, and the processor is to execute the machine-executable instructions to implement the message processing method of the above examples.

The present disclosure provides a computer program product, which includes a computer program, and when the computer program is executed by a processor, the message processing method of the above example is realized.

The present disclosure provides a machine-readable storage medium, which stores machine-executable instructions executable by the processor, and the processor is to execute the machine-executable instructions to implement the message processing method of the above examples.

It can be seen from the above technical solution that in the examples of the present disclosure, a main path is carried at a segment routing header of a data message, the main path includes device information of a security device, a network tag is obtained through the device information, and then the network tag is added to an inner-layer message, so that the modified inner-layer message is sent to the security device by combining the segment routing and the network tag, to cause the security device to perform security detection processing on the data message, thereby providing security service for the data message, transmitting the data message in the network after security detection processing, so as to avoid potential security risks to the network. Combined with segment routing and network tag, the dynamic and efficient path control of multiple security devices is realized, and unified path control and management are realized. The path sequence of security devices may be flexibly configured and adjusted according to different network security requirements. It may avoid redundant data message conversion and forwarding, and improve network transmission efficiency and processing capacity.

### BRIEF DESCRIPTION OF DRAWINGS

FIG. 1 is a flowchart of a message processing method according to an example of the present disclosure.
FIG. 2A is a schematic diagram of an application scenario of a segment routing policy according to an example of the present disclosure.
FIG. 2B is a schematic diagram of an application scenario of a segment routing policy according to an example of the present disclosure.
FIG. 2C is a schematic diagram of an application scenario of a segment routing policy according to an example of the present disclosure.
FIG. 3 is a flowchart of a message processing method according to an example of the present disclosure.
FIG. 4 is a schematic diagram of a segment routing header according to an example of the present disclosure.
FIG. 5 is a schematic diagram of a structure of a message processing apparatus according to an example of the present disclosure.
FIG. 6 is a hardware structure diagram of a network device according to an example of the present disclosure.

### DETAILED DESCRIPTION

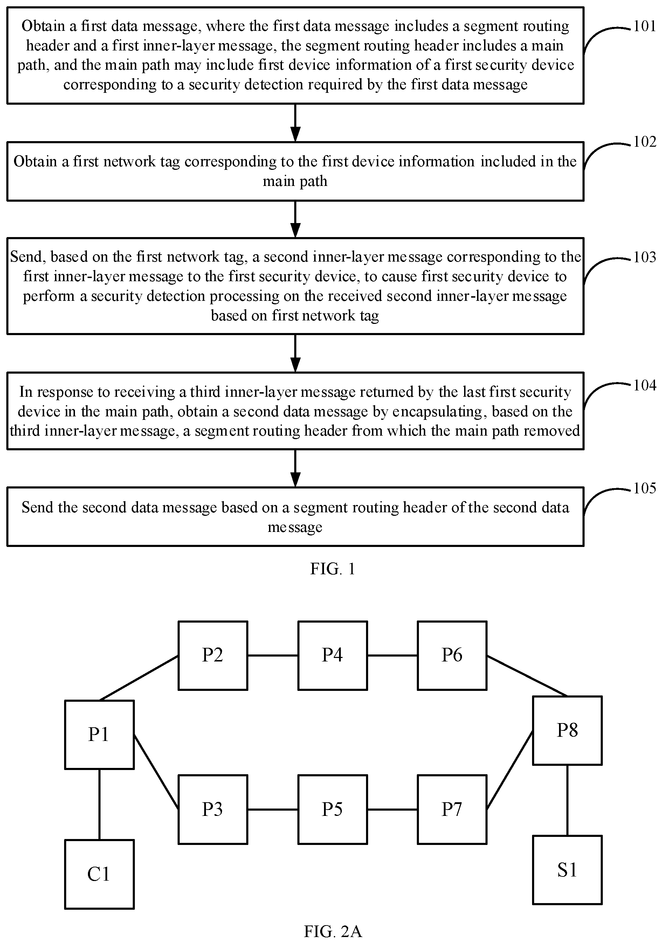

An example of the present disclosure proposes a message processing method that may be performed by a network device, where the network device may be used as a head-end node, the network device may be used as an intermediate node, or the network device may be used as a tail-end node. Referring to FIG. 1, a flowchart of the message processing method is shown, which may include the following blocks.

At block 101, a first data message is obtained, where the first data message includes a segment routing header and a first inner-layer message, the segment routing header includes a main path, and the main path may include first device information of a first security device corresponding to a security detection required by the first data message.

At block 102, a first network tag corresponding to the first device information included in the main path is obtained.

For example, a configured tag mapping table may be queried using the first device information to obtain the first network tag corresponding to the first device information, and the tag mapping table includes a corresponding relationship between the device information and the network tag.

At block 103, based on the first network tag, a second inner-layer message corresponding to the first inner-layer message is sent to the first security device, to cause first security device to perform a security detection processing on the received second inner-layer message based on first network tag. For example, when the first security device receives the second inner-layer message, if the first network tag in the second inner-layer message is consistent with a network tag of the first security device, the security detection processing is performed on the second inner-layer message. On the contrary, if the first network tag in the second inner-layer message is inconsistent with the network tag of the first security device, the security detection processing is not performed on the second inner-layer message.

At block 104, in response to receiving a third inner-layer message returned by the last first security device in the main path, a second data message is obtained by encapsulating, based on the third inner-layer message, a segment routing header from which the main path is removed.

For example, the third inner-layer message may include a network tag, and the network tag in the third inner-layer message may be removed, and on the basis of the inner-layer message from which the network tag has been removed (the same as the first inner-layer message), the inner-layer message is encapsulated with a segment routing header from which the main path is removed. Or, on the basis of the third inner-layer message, the third inner-layer message may be encapsulated with the segment routing header from which the main path is removed.

At block 105, the second data message is sent based on a segment routing header of the second data message.

In an example, in response to determining that the main path includes first device information of a plurality of first security devices, sending, based on the first network tag, the second inner-layer message corresponding to the first inner-layer message to the first security device may include: obtaining a first information mapping table corresponding to the main path, where the first information mapping table includes first network tags corresponding to the first device information of the plurality of first security devices; sequentially traversing each first network tag in the first information mapping table; and for a current network tag being traversed, obtaining a second inner-layer message by adding the current network tag to the first inner-layer message, and sending the second inner-layer message to the first security device; determining, in response to receiving a third inner-layer message returned by the first security device, whether a network tag in the third inner-layer message is the last first network tag in the first information mapping table; traversing, in response to determining that the network tag in the third inner-layer message is not the last first network tag in the first information mapping table, a first network tag immediately after the network tag in the third inner-layer message from the first information mapping table as the current network tag, and returning to an operation of the obtaining a second inner-layer message by adding the current network tag to the first inner-layer message. In response to determining that the network tag in the third inner-layer message is the last first network tag in the first information mapping table, it means that the third inner-layer message returned by the last first security device in the main path is received, and block 104 is executed.

In an example, an order of the first network tags in the first information mapping table matches an order of multiple items of the first device information included in the main path, that is, the order of the two is consistent.

In an example, before obtaining the first network tag corresponding to the first device information included in the main path, a routing type field may further be parsed from the segment routing header; and in response to determining that the routing type field is a first value, the first device information included in the main path is obtained from the segment routing header, where the first value may indicate a route type of combined segment routing and network tag.

In an example, after encapsulating, based on the third inner-layer message, a segment routing header from which the main path is removed, the routing type field in the segment routing header may be modified from the first value to a second value, where the second value may indicate a routing type of segment routing.

In an example, the segment routing header further includes a backup path, and the backup path includes second device information of a second security device corresponding to the security detection required by the first data message. Based on this, in response to determining whether the main path is available, a first network tag corresponding to the first device information included in the main path is obtained.

In response to determining that the main path is not available and the backup path is available, a second network tag corresponding to the second device information included in the backup path may be obtained; based on the second network tag, a fourth inner-layer message corresponding to the first inner-layer message may be sent to the second security device, to cause the second security device to perform the security detection processing on the received fourth inner-layer message based on the second network tag. For example, if the second network tag in the fourth inner-layer message is consistent with a network tag of the second security device, the second security device performs security detection processing on the fourth inner-layer message.

In response to receiving a fifth inner-layer message returned by the last second security device in the backup path, the second data message is obtained by encapsulating, based on the fifth inner-layer message, a segment routing header from which the main path and the backup path are removed.

In an example, determining whether the main path is available may include: determining, in response to determining that an available state of each first security device in the main path meets a set condition, that the main path is available; where, for each first security device, a method for determining that the available state of the first security device meets the set condition is as follows.

Obtain a link state of the first security device, and in a case that the link state is reachable, it may be determined that the available state of the first security device meets the set condition; or in a case that the link state is unreachable, it may be determined that the available state of the first security device does not meet the set condition. Or, obtain a routing type identifier of the first security device, and in a case that the routing type identifier is a first value, it may be determined that the available state of the first security device meets the set condition, or in a case that the routing type is a second value, it may be determined that the available state of the first security device does not meet the set condition, where the first value indicates a route type of combined segment routing and network tag, and the second value indicates a route type of segment routing. Or, obtain a link state and a routing type identifier of the first security device, and in a case that the link state is reachable and the routing type identifier is a first value, it may be determined that the available state of the first security device meets the set condition, or in a case that the link state is unreachable and/or the routing type identifier is a second value, it may be determined that the available state of the first security device does not meet the set condition.

In an example, the segment routing header may include a segment routing list, and the segment routing list may include segment routing addresses of intermediate nodes between a head-end node and a tail-end node, where the segment routing list further includes the main path and the backup path, and both the main path and the backup path are located in front of the segment routing addresses.

In an example, in a case that the network device is a head-end node, a third data message may be further obtained, where the third data message includes a segment routing header and a first inner-layer message; a target routing type corresponding to internet protocol (IP) address information of the first inner-layer message may be determined, and in response to determining that the target routing type is a route type of combined segment routing and network tag, the main path and the backup path corresponding to the IP address information are obtained; the first data message is obtained by the main path and the backup path are added in the segment routing header of the third data message and modifying the routing type field in the segment routing header to a first value, and the first data message is sent to the intermediate node.

It can be seen from the above technical solution that in the example of the present disclosure, a main path is carried at a segment routing header of a data message, the main path includes device information of a security device, a network tag is obtained through the device information, and then the network tag is added to an inner-layer message, so that the modified inner-layer message is sent to the security device by combining the segment routing and the network tag, to cause the security device to perform a security detection processing on the data message, thereby providing security service for the data message, transmitting the data message in the network after security detection processing, so as to avoid potential security risks to the network. Combined with segment routing and network tag, the dynamic and efficient path control of multiple security devices is realized, and unified path control and management are realized. The path sequence of security devices may be flexibly configured and adjusted according to different network security requirements. It may avoid redundant data message conversion and forwarding, and improve network transmission efficiency and processing capacity.

In the following, the above technical solution of the example of the present disclosure will be explained in combination with specific application scenarios.

Based on the segment routing policy, after receiving a data message, a head-end node encapsulates a segment routing header for the data message, and the segment routing header includes a segment routing list, which includes an IPv6 address of each node on a specific path, and each node on the specific path forwards the data message based on the segment routing header. As shown in FIG. 2A, it is a schematic diagram of an application scenario of segment routing policy. A source node C1 (such as a terminal device) may send a data message to a destination node S1 (such as a server), with P1 as a head-end node (such as a router, a switch and other network devices) and P8 as a tail-end node (such as a router, a switch and other network devices). On a forwarding path, P2, P4 and P6 may serve as intermediate nodes (such as a router, a switch and other network devices), while on another forwarding path, P3, P5, and P7 may serve as intermediate nodes.

However, after receiving the data message, each intermediate node may only forward the data message to the next node on a specific path based on the segment routing header. For a security device that does not support segment routing, the intermediate nodes may not send the data message to the security device.

For example, after receiving the data message, the intermediate node P2 may only forward the data message to the intermediate node P4 based on the segment routing header, the intermediate node P4 may only forward the data message to the intermediate node P6 based on the segment routing header, and the intermediate node P6 may only forward the data message to the tail-end node P8 based on the segment routing header.

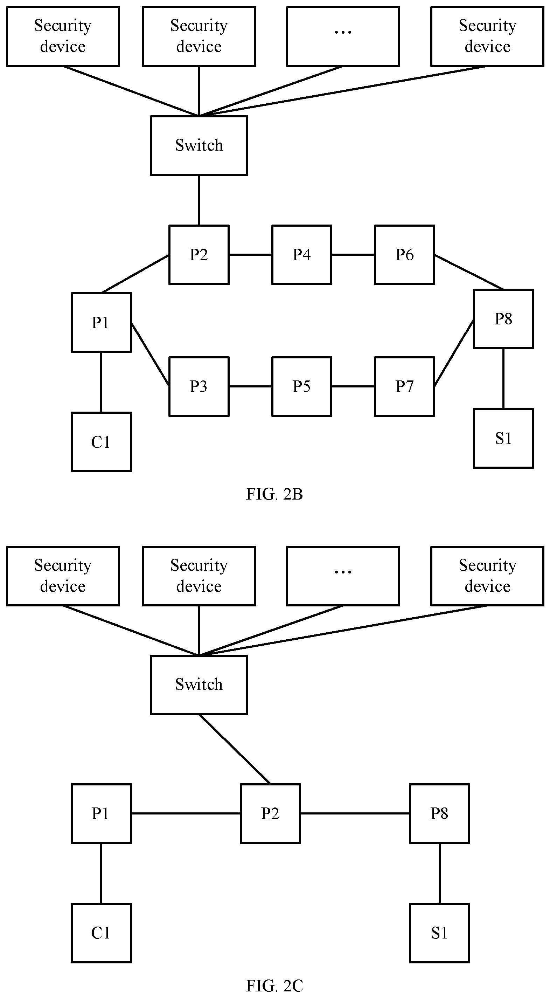

In view of the above findings, in the example of the present disclosure, the data message may be sent to the security device by combining the segment routing and the network tag, so that the security device may perform security detection processing on the data message. Refer to FIG. 2B, which is a schematic diagram of an application scenario of segment routing policy. The intermediate node P2 is connected with a plurality of security devices through a switch, and these security devices may include security devices supporting DDoS protection, security devices supporting WAF, security devices supporting firewalls and security devices supporting intrusion prevention systems, which are not limited.

Because the processing flow of intermediate nodes is the same, in order to simplify the application scenario of segment routing policy, multiple intermediate nodes may be simplified into one intermediate node. Refer to FIG. 2C, which is a schematic diagram of an application scenario of segment routing policy. A source node C1 (such as a terminal device) may send a data message to a destination node S1 (such as a server), with P1 as a head-end node (such as a router, a switch and other network devices), P8 as a tail-end node (such as a router, a switch and other network devices), and P2 as an intermediate node (such as a router and a switch). In addition, the intermediate node P2 is connected with a plurality of security devices through a switch.

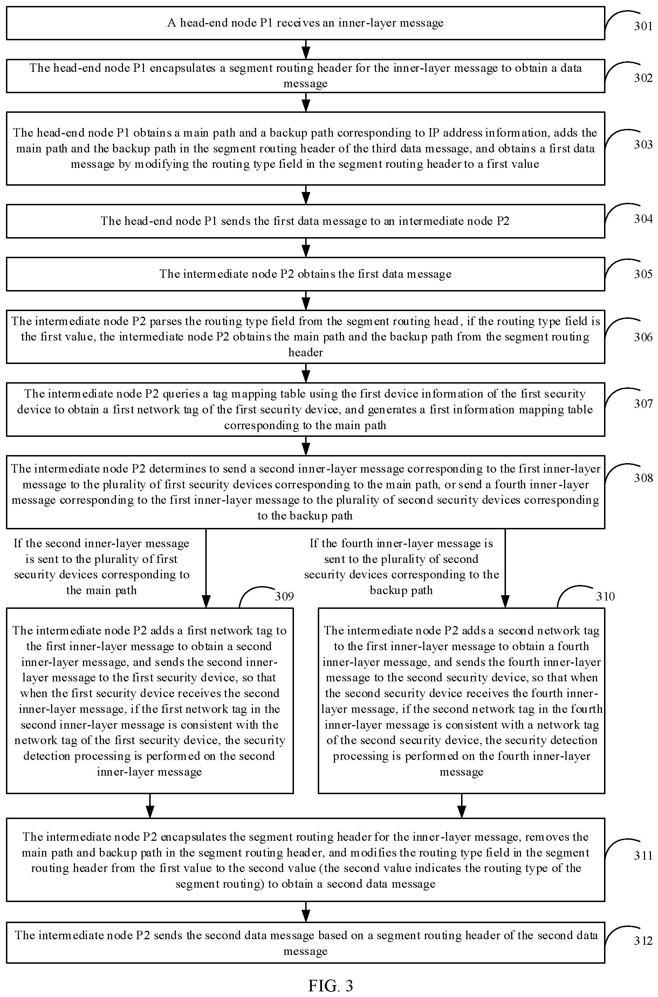

In the above application scenario, a message processing method is proposed in the example of the present disclosure, which may realize access control of data messages. Referring to FIG. 3, a flowchart of the message processing method is shown.

At block 301, a head-end node P1 receives an inner-layer message, which is a data message sent by a source node C1 to a destination node S1. For example, a source IP address of the inner-layer message is an IP address of the source node C1, a destination IP address of the inner-layer message is an IP address of the destination node S1, a source Media Access Control (MAC) address of the inner-layer message is an MAC address of the source node C1, and a destination MAC address of the inner-layer message is an MAC address of the destination node S1 or any MAC address.

At block 302, the head-end node P1 encapsulates a segment routing header for the inner-layer message to obtain a data message, which is named as a third data message for convenience of distinction, and the third data message may include the segment routing header and the inner-layer message.

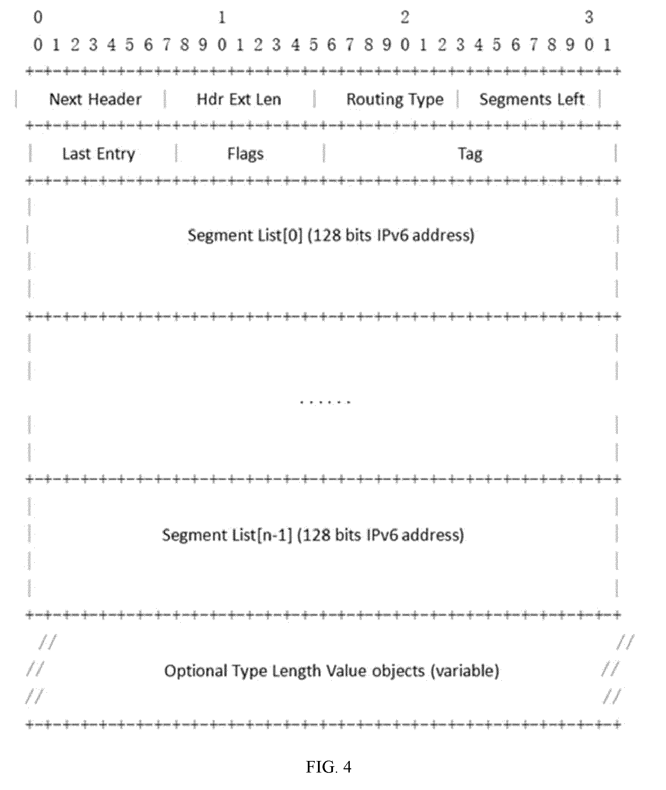

In an example, after obtaining the inner-layer message, the head-end node P1 may encapsulate a Segment Routing Header (referred to as SRH, also named as segment routing tunnel head) for the inner-layer message. Please refer to FIG. 4, which is a schematic diagram of the segment routing header, and the segment routing header may sequentially include the following contents.

Next Header: indicates a type of a header immediately following the segment routing header, such as IPv4 encapsulation, IPv6 encapsulation, IPv6-Route, ICMPv6, etc.

Hdr Ext Len (header extension length): indicates a length of segment routing header. Hdr Ext Len may refer to a length of segment routing header excluding first 8 bytes (the first 8 bytes are fixed length).

Routing Type: indicates a type of routing header.

Segments Left: indicates the number of intermediate nodes that should still be visited before reaching a destination node, i.e., the number of intermediate nodes between the current node and the tail-end node.

Last Entry: indicates an index of the last element in the segment routing list.

Flags: indicates some identifiers of the data message, which may include 8 bits.

Tag: identifies packets in the same group.

Segment List[0]~Segment List[n-1]: segment routing list (also named as segment list) may include Segment List[0]~Segment List[n-1], The segment routing list is encoded starting from the last segment of the path. Segment List[0] is the last segment of the path (indicating identification information of the last node, such as IPv6 address), Segment List[1] is the second-to-last segment (identification information of the second-to-last node), and so on, Segment List[n-2] is the second segment (identification information of the second node), and Segment List[n-1] is the first segment (identification information of the first node).

Optional Type Length Value objects, this item is optional.

At block 303, if IP address information of the inner-layer message corresponds to a route type of combined segment routing and network tag, the head-end node P1 obtains a main path and a backup path corresponding to the IP address information, adds a main path and a backup path in the segment routing header of the third data message, and obtains a first data message by modifying the routing type field in the segment routing header to a first value. Or, if the IP address information of the inner-layer message corresponds to a route type of segment routing, the third data message is taken as the first data message.

In an example, after receiving the inner-layer message, the head-end node P1 may further determine the routing type corresponding to the IP address information (such as destination IP address and/or source IP address) of the inner-layer message. For example, a mapping relationship between IP addresses (such as IP subnets) and routing types may be preconfigured at the head-end node P1. Based on this, after receiving the inner-layer message, the head-end node P1 may obtain the destination IP address of the inner-layer message, query the mapping relationship through the destination IP address, and obtain the corresponding routing type.

The routing type may be a routing type of segment routing, such as SRv6 (Segment Routing over IPv6). When the IP address information of the inner-layer message corresponds to the routing type of segment routing, it means that segment routing processing is performed on the data message. Based on this, the head-end node P1 takes the third data message as the first data message, and subsequent segment routing processing is performed on the first data message.

The routing type may be a routing type of combined segment routing and network tag, such as a routing type of combined SRv6 and VLAN (Virtual Local Area Network) network tag, or a routing type of combined SRv6 and VX LAN (Virtual Extensible Local Area Network) network tag. When the IP address information of the inner-layer message corresponds to the routing type of combined segment routing and network tag, it means that a processing which combines segment routing with network tag is performed on the data message. Based on this, the head-end node P1 may obtain the main path and the backup path corresponding to the IP address information, add the main path and the backup path in the segment routing header of the third data message, and obtains the first data message by modifying the routing type field in the segment routing header to a first value, and then perform the processing combining the segment routing with the network tag on the first data message. For the processing details, please refer to subsequent examples.

In an example, if a certain IP address information (multiple IP address information) corresponds to a routing type of combined segment routing and network tag, a main path and a backup path corresponding to the IP address information may be pre-configured at the head-end node P1. Based on this, after receiving the inner-layer message, the head-end node P1 may further obtain the IP address information of the inner-layer message, and obtain the main path and the backup path corresponding to the IP address information.

The main path may include device information of at least one security device corresponding to the security detection required by the first data message. For convenience of distinction, the security device corresponding to the main path is named as the first security device, and device information of the first security device is named as first device information. Based on this, the main path may include the first device information of at least one first security device (such as a plurality of first security devices).

The first device information may be a unique identifier of the first security device or other device information such as the IP address, MAC address, etc. of the first security device, which is not limited.

When preconfiguring the main path corresponding to the IP address information at the head-end node P1, the order of multiple first security devices corresponding to the main path may further be planned, which is not limited and may be configured according to experience.

For example, if the order of multiple first security devices is first security device a1, first security device a2, and first security device a3, then the main path sequentially includes first device information of first security device a1, first device information of first security device a2, and first device information of first security device a3.

For example, if the order of multiple first security devices is first security device a3, first security device a1, and first security device a2, then the main path sequentially includes first device information of first security device a3, first device information of first security device a1, and first device information of first security device a2.

The backup path may include device information of at least one security device corresponding to the security detection required by the first data message. For convenience of distinction, the security device corresponding to the backup path is named as the second security device, and device information of the second security device is named as second device information. Based on this, the backup path may include the second device information of at least one second security device (such as a plurality of second security devices).

The second device information may be a unique identifier of the second security device or other device information such as the IP address, MAC address, etc. of the second security device, which is not limited.

When preconfiguring the backup path corresponding to the IP address information at the head-end node P1, the order of multiple second security devices corresponding to the backup path may further be planned, which is not limited and may be configured according to experience.

For example, if the order of multiple second security devices is second security device b1, second security device b2, and second security device b3, then the backup path sequentially includes second device information of second security device b1, second device information of second security device b2, and second device information of second security device b3.

For example, if the order of multiple second security devices is second security device b3, second security device b1, and second security device b2, then the backup path sequentially includes second device information of second security device b3, second device information of second security device b1, and second device information of second security device b2.

In an example, after obtaining the main path and the backup path corresponding to the IP address information of the inner-layer message, the head-end node P1 may further add the main path and the backup path to the segment routing header of the third data message.

For example, the segment routing header includes a segment routing list, which includes segment routing addresses of intermediate nodes between a head-end node and a tail-end node. On this basis, the head-end node P1 may add the main path and the backup path to the segment routing list of the segment routing header. The head-end node P1 may further add the main path and the backup path at other positions of the segment routing header, which is not limited.

When adding a main path and a backup path to the segment routing list of the segment routing header, the segment routing list further includes the main path and the backup path. The main path may be located in front of all segment routing addresses, behind all segment routing addresses, or in the middle of two adjacent segment routing addresses. There are no restrictions on the position of the main path, and an example is given where the main path is located at the front of all segment routing addresses.

Similarly, the backup path may be located in front of all segment routing addresses, behind all segment routing addresses, or in the middle of two adjacent segment routing addresses. There are no restrictions on the position of the backup path, and an example is given where the backup path is located at the front of all segment routing addresses.

When the segment routing list includes a main path and a backup path, the main path may be located in front of the backup path, and the main path may also be located behind the backup path. Take an example that the main path is located in front of the backup path.

In block 302, when the head-end node P1 encapsulates the segment routing header for the inner-layer message, the routing type field (such as Routing Type) in the segment routing header takes a second value, and the second value indicates the routing type of the segment routing. In block 303, if the IP address information of the inner-layer message corresponds to the routing type of combined segment routing and network tag, the head-end node P1 may further modify the routing type field (e.g., Routing Type) in the segment routing header to a first value, which indicates the routing type of combined segment routing and network tag. For example, the first value may be 253 or any other value, there is no restriction on this. The value of 253 indicates the routing type of combined segment routing and network tag.

In an example, the main path field (used to carry the main path), the backup path field (used to carry the backup path) and the routing type field may be named as ESRH (Extensible Segment Routing header) field, that is, the ESRH field includes the main path field, the backup path field and the routing type field. Based on this, if the IP address information of the inner-layer message corresponds to the routing type of combined segment routing and network tag, the head-end node P1 may add ESRH field in the segment routing header.

For example, the ESRH field of the segment routing header may include but not limited to the following information.

Routing Type: defines a private implementation of the routing extension header with a value of 253, representing SRv6 vlan/vxlan tag forwarding, i.e., the first value, which indicates the routing type of combined segment routing and network tag.

Main path: defines a processing order of the main path for security devices to ensure that the data message is checked along the predetermined path, and uses Request for Comments (RFC) to define first 128 bytes of the segment-list. For example, take the first 128 bytes of the segment routing list as the main path field, and the main path is carried by the main path field.

Backup path: defines a processing order of the backup path for security devices to ensure that the data message is checked along the predetermined path, and uses RFC to define second 128 bytes of the segment-list. For example, take the second 128 bytes of the segment routing list as the backup path field, and the backup path is carried by the backup path field.

For example, the main path sequentially includes first device information 0x01 of Firewall security device 1, first device information 0x02 of DDoS security device 1, first device information 0x03 of IPS security device 1 and first device information 0x04 of WAF security device 1. The backup path sequentially includes second device information 0x05 of Firewall security device 2, second device information 0x06 of DDoS security device 2, second device information 0x07 of IPS security device 2 and second device information 0x08 of WAF security device 2. In summary, it can be seen that the main path may include 0x010x020x030x04 and the backup path may include 0x050x060x070x08.

At block 304, the head-end node P1 sends the first data message to an intermediate node P2.

At block 305, the intermediate node P2 obtains the first data message, the first data message is a message sent from the head-end node P1 to a tail-end node P8, and the first data message includes a segment routing header and an inner-layer message, which is recorded as the first inner-layer message for the convenience of distinction.

At block 306: the intermediate node P2 parses the routing type field from the segment routing header. If the routing type field is the second value, the intermediate node P2 sends the first data message to the tail-end node P8 based on the segment routing header, and the second value indicates the routing type of segment routing, and this process will not be repeated here.

Or, if the routing type field is the first value (e.g., 253), the intermediate node P2 obtains the main path and the backup path from the segment routing header, and the first value indicates the routing type of combined segment routing and network tag. The main path may include first device information of the first security device, such as first device information of a plurality of first security devices. In addition, the backup path may include second device information of the second security device, such as second device information of a plurality of second security devices.

When the routing type field is the first value, the head-end node P1 may add the main path and the backup path in the segment routing header, and the intermediate node P2 obtains the main path and the backup path from the segment routing header.

At block 307, the intermediate node P2 queries a tag mapping table using the first device information of the first security device to obtain a first network tag of the first security device, and generates a first information mapping table corresponding to the main path, where the first information mapping table includes first network tags of the plurality of first security devices.

The intermediate node P2 queries the tag mapping table using the second device information of the second security device to obtain a second network tag of the second security device, and generates a second information mapping table corresponding to the backup path, where the second information mapping table includes second network tags of the plurality of the second security devices.

In an example, the tag mapping table may be pre-configured at the intermediate node P2, and the tag mapping table includes the correspondence between device information and network tags. See Table 1 for an example of the tag mapping table.

**Table 1**

| Device information | Network tag (VLAN or VXLAN) |
|---|---|
| 0x01 | 10 |
| 0x02 | 20 |
| 0x03 | 30 |
| 0x04 | 40 |
| 0x05 | 50 |
| 0x06 | 20 |
| 0x07 | 30 |
| 0x08 | 40 |
| ... | ... |

When configuring the tag mapping table, for a plurality of first security devices corresponding to the main path, different first security devices need to correspond to different network tags, that is, different first security devices do not correspond to the same network tag, and data messages may be sent to different first security devices of the main path by corresponding to different network tags. For a plurality of second security devices corresponding to the backup path, different second security devices need to correspond to different network tags, that is, different second security devices do not correspond to the same network tag, and data messages may be sent to different second security devices of the backup path by corresponding to different network tags. In addition, the network tag corresponding to the first security device and the network tag corresponding to the second security device may be the same or different.

Given the first device information 0x01 and network tag 10 of Firewall security device 1, a correspondence between 0x01 and network tag 10 may be configured in the tag mapping table. Similarly, given the first device information 0x02 and network tag 20 of DDoS security device 1, a correspondence between 0x02 and network tag 20 may be configured in the table, and so on, and the configuration process of this tag mapping table is not limited.

In an example, the main path may include 0x010x020x030x04, and the intermediate node P2 queries the tag mapping table using the first device information 0x01 to obtain the first network tag 10 (for convenience, the network tag corresponding to the first device information is named as the first network tag), queries the table using the first device information 0x02 to obtain the first network tag 20, queries the table using the first device information 0x03 to obtain the first network tag 30, and queries the table using the first device information 0x04 to obtain the first network tag 40.

On this basis, the intermediate node P2 may further generate a first information mapping table, and the first information mapping table includes these first network tags. The order of the first network tags in the first information mapping table matches an order of multiple items of the first device information included in the main path, that is, the order of the two is consistent. For example, since the main path sequentially includes the first device information 0x01, the first device information 0x02, the first device information 0x03 and the first device information 0x04, therefore, the first information mapping table sequentially includes the first network tag 10 corresponding to the first device information 0x01, the first network tag 20 corresponding to the first device information 0x02, the first network tag 30 corresponding to the first device information 0x03 and the first network tag 40 corresponding to the first device information 0x04.

In an example, the backup path may include 0x050x060x070x08, and the intermediate node P2 queries the tag mapping table using the second device information 0x05 to obtain the second network tag 50 (for convenience, the network tag corresponding to the second device information is named as the second network tag), queries the table using the second device information 0x06 to obtain the second network tag 20, queries the table using the second device information 0x07 to obtain the second network tag 30, and queries the table using the second device information 0x08 to obtain the second network tag 40.

On this basis, the intermediate node P2 may further generate a second information mapping table, and the second information mapping table includes these second network tags. The order of a plurality of second network tags in the second information mapping table matches an order of the plurality of second device information included in the backup path, that is, the order of the two is consistent. For example, since the backup path sequentially includes the second device information 0x05, the second device information 0x06, the second device information 0x07 and the second device information 0x08, therefore, the second information mapping table sequentially includes the second network tag 50 corresponding to the second device information 0x05, the second network tag 20 corresponding to the second device information 0x06, the second network tag 30 corresponding to the second device information 0x07 and the second network tag 40 corresponding to the second device information 0x08.

In an example, when the intermediate node P2 generates the first information mapping table, the first information mapping table further includes the IP address information of the first inner-layer message. For example, the first information mapping table includes the corresponding relationship between the IP address information and the first network tag 10, the first network tag 20, the first network tag 30 and the first network tag 40, and the first information mapping table may be an Access Control List (ACL). When the intermediate node P2 generates the second information mapping table, the second information mapping table further includes the IP address information of the first inner-layer message. For example, the second information mapping table includes the corresponding relationship between the IP address information and the second network tag 50, the second network tag 20, the second network tag 30 and the second network tag 40, and the second information mapping table may be an ACL.

At block 308: the intermediate node P2 determines to send a second inner-layer message corresponding to the first inner-layer message to the plurality of first security devices corresponding to the main path, or send a fourth inner-layer message corresponding to the first inner-layer message to the plurality of second security devices corresponding to the backup path. If the second inner-layer message is sent to the plurality of first security devices corresponding to the main path, block 309 may be executed, or if the fourth inner-layer message is sent to the plurality of second security devices corresponding to the backup path, block 310 may be executed.

In an example, if the main path is available, it is determined to send the second inner-layer message to the plurality of first security devices corresponding to the main path. Or, if the main path is unavailable and the backup path is available, it is determined to send the fourth inner-layer message to the plurality of second security devices corresponding to the backup path. Or, if the main path is unavailable and the backup path is unavailable, the intermediate node P2 sends the first data message to the tail-end node P8 based on the segment routing header, and the intermediate node P2 outputs alarm information indicating that both the main path and the backup path are unavailable. In this way, after the user is informed of the alarm information, the main path and the backup path may be repaired.

In an example, when the intermediate node P2 configures a tag mapping table, the tag mapping table may further include the corresponding relationship between device information and link state, and the tag mapping table may further include the corresponding relationship between the device information and routing type. See Table 2 for an example of the tag mapping table. Table 2 is just an example. Besides the network tag, link state and routing type, the tag mapping table may further include other contents, such as encapsulation type (IPv4 encapsulation or IPv6 encapsulation), and there is no restriction on this tag mapping table.

**Table 2**

| Device information | | Network tag (VLAN or VXLAN) | | Link state | | Routing type | |
|---|---|---|---|---|---|---|---|
| | 0x01 | | 10 | | 1 | | SRv6-VLAN |
| | 0x02 | | 20 | | 1 | | SRv6-VLAN |
| | 0x03 | | 30 | | 1 | | SRv6-VLAN |
| | 0x04 | | 40 | | 1 | | SRv6-VLAN |
| | 0x05 | | 50 | | 1 | | SRv6-VLAN |
| | 0x06 | | 20 | | 1 | | SRv6-VLAN |
| | 0x07 | | 30 | | 1 | | SRv6-VLAN |
| | 0x08 | | 40 | | 1 | | SRv6-VLAN |
| | ... | | ... | | ... | | ... |

For the link state of the tag mapping table, the intermediate node P2 may periodically detect a link state of the first security device and update the link state of the first security device in the tag mapping table. The intermediate node P2 may periodically detect a link state of the second security device and update the link state of the second security device in the tag mapping table. For example, in each detection cycle, the intermediate node P2 may send a Bidirectional Forwarding Detection (BFD) detection message to a security device (such as the first security device or the second security device), and in response to receiving a BFD response message returned by the security device, the link state of the security device is determined to be reachable, and the link state of the security device is updated to reachable (such as 1) in the tag mapping table. If no BFD response message is received, the link state of the security device is determined to be unreachable, and the link state of the security device in the tag mapping table is updated to unreachable (e.g., 0).

Regarding the routing type in the tag mapping table, if the first security device supports a routing type of combined segment routing and network tag, the routing type of combined segment routing and network tag, such as SRv6-VLAN or SRv6-VXLAN, is configured in the tag mapping table. Or, if the first security device does not support the route type of combined segment routing and network tag, the route type of segment routing, such as SRv6, is configured in the tag mapping table. If the second security device supports a routing type of combined segment routing and network tag, the routing type of combined segment routing and network tag, such as SRv6-VLAN or SRv6-VXLAN, is configured in the tag mapping table. Or, if the second security device does not support the route type of combined segment routing and network tag, the route type of segment routing, such as SRv6, is configured in the tag mapping table.

In an example, the main path may include 0x010x020x030x04. The intermediate node P2 queries the tag mapping table using the first device information 0x01 to obtain the link state and routing type of the first security device. If the link state is reachable (such as link state is 1) and the routing type is the routing type of combined segment routing and network tag (such as routing type is SRv6-VLAN), it is determined that the available state of the first security device is available. If the link state is unreachable (for example, the link state is 0), and/or the routing type is the routing type of segment routing (for example, the routing type is SRv6), it is determined that the available state of the first security device is unavailable. Similarly, the intermediate node P2 queries the tag mapping table using the first device information 0x02, the first device information 0x03 and the first device information 0x04 to obtain the link state and the routing type. Based on the above processing, the available state of each first security device may be obtained, and the available state is available or unavailable.

Based on this, if all the first security devices are available, the main path is determined to be available, and if any first security device is unavailable, the main path is determined to be unavailable.

The backup path may include 0x050x060x070x08. The intermediate node P2 queries the tag mapping table using the second device information 0x05 to obtain the link state and routing type of the second security device. If the link state is reachable and the routing type is the routing type of combined segment routing and network tag, it is determined that the available state of the second security device is available. If the link state is unreachable, and/or the routing type is the routing type of segment routing, the available state of the second security device is determined to be unavailable. Similarly, the intermediate node P2 queries the tag mapping table using the second device information 0x06, the second device information 0x07 and the second device information 0x08 to obtain the link state and the routing type. Based on the above processing, the available state of each second security device may be obtained, and the available state of each second security device is available or unavailable.

Based on this, if all the second security devices are available, the backup path is determined to be available, and if any second security device is unavailable, the backup path is determined to be unavailable.

At block 309, the intermediate node P2 adds a first network tag to the first inner-layer message to obtain a second inner-layer message, and sends the second inner-layer message to the first security device, so that when the first security device receives the second inner-layer message, if the first network tag in the second inner-layer message is consistent with the network tag of the first security device, the security detection processing is performed on the second inner-layer message.

In an example, block 309 may be implemented by the following blocks.

At block S11, the intermediate node P2 sequentially traverses each first network tag in the first information mapping table. For a current network tag being traversed, the current network tag is added to the first inner-layer message to obtain a second inner-layer message.

In an example, the first information mapping table includes the corresponding relationship between the IP address information (such as the destination IP address and/or the source IP address) of the inner-layer message and the first network tag 10, the first network tag 20, the first network tag 30 and the first network tag 40. The intermediate node P2 traverses the first network tag 10 from the first information mapping table as the current network tag. After obtaining the first data message, the intermediate node P2 may remove the segment routing header of the first data message (the segment routing header needs to be cached so as to add the segment routing header to the inner-layer message later) to obtain an inner-layer message 1 (i.e., the first inner-layer message) in the first data message. On this basis, the intermediate node P2 adds the first network tag 10 to the inner-layer message 1 to obtain a modified inner-layer message 2 (i.e., the second inner-layer message).

A source IP address of inner-layer message 1 is the IP address of source node C1, a destination IP address of inner-layer message 1 is the IP address of destination node S1, a source MAC address of inner-layer message 1 is the MAC address of source node C1, and a destination MAC address of inner-layer message 1 is the MAC address of destination node S1 or any MAC address. Based on this, after obtaining the inner-layer message 2, the intermediate node P2 may further modify a source MAC address of the inner-layer message 2 to the MAC address of the intermediate node P2, and modify a destination MAC address of the inner-layer message 2 to the MAC address of the Firewall security device 1 corresponding to the first network tag 10.

For example, the intermediate node P2 may configure a static route in advance, which may include a corresponding relationship between the first network tag 10 and the MAC address of the Firewall security device 1. Based on this, the MAC address of the Firewall security device 1 may be obtained by querying this static route through the first network tag 10.

At block S12, the intermediate node P2 sends the second inner-layer message to a first security device corresponding to the current network tag. For example, since the destination MAC address of inner-layer message 2 is the MAC address of Firewall security device 1, the inner-layer message 2 may be sent to the Firewall security device 1.

To sum up, it can be seen that the intermediate node P2 serves as a gateway, which may parse and process the ESRH field, tag the inner-layer message with a network tag (such as VLAN tag) and forward the message to the security device.

At block S13, when the Firewall security device 1 receives the second inner-layer message, if the first network tag 10 in the second inner-layer message is consistent with a network tag of the Firewall security device 1, the Firewall security device 1 performs security detection processing on the second inner-layer message. Or, if the first network tag 10 in the second inner-layer message is inconsistent with the network tag of the Firewall security device 1, the second inner-layer message is discarded.

For example, the Firewall security device 1 may obtain the first network tag 10 carried in the inner-layer message 2. Because the network tag of the Firewall security device 1 is the network tag 10, the first network tag 10 is consistent with the network tag of the Firewall security device 1, and the Firewall security device 1 performs security detection processing on the inner-layer message 2. For other security devices, such as DDoS security device 1, because the first network tag 10 is inconsistent with a network tag of the DDoS security device 1, the inner-layer message 2 is discarded.

For example, when configuring the Firewall security device 1, the network tag 10 may bind a Virtual Private Network (VPN) of the Firewall security device 1. Based on this, after the Firewall security device 1 obtains the first network tag 10 carried in the inner-layer message 2, because the first network tag 10 corresponds to the VPN of the Firewall security device 1, therefore, the first network tag 10 is consistent with the network tag of the Firewall security device 1, and the Firewall security device 1 performs security detection processing on the inner-layer message 2.

For example, when the Firewall security device 1 performs security detection processing on the inner-layer message 2, a predefined policy may be used for performing security detection processing on the inner-layer message 2, and there is no restriction on the security detection processing mode.

At block S14: if a security detection processing result of the second inner-layer message is safe, the Firewall security device 1 sends a third inner-layer message to the intermediate node P2, where a source MAC address of the third inner-layer message is the MAC address of the Firewall security device 1, and a destination MAC address of the third inner-layer message is the MAC address of the intermediate node P2. Or, if the security detection processing result of the second inner-layer message is unsafe, the Firewall security device 1 discards the second inner-layer message.

At block S15: if the intermediate node P2 does not receive the inner-layer message returned by the Firewall security device 1, the message transmission flow is ended. Or, if the intermediate node P2 receives the third inner-layer message returned by the Firewall security device 1, the intermediate node P2 obtains the IP address information and the first network tag 10 from the third inner-layer message.

At block S16, the intermediate node P2 queries the first information mapping table corresponding to the IP address information, and determines the first network tag 10 in the third inner-layer message as the current network tag. The intermediate node P2 determines whether the current network tag is the last first network tag in the first information mapping table.

If not, a first network tag immediately after the current network tag in the first information mapping table is traversed as the current network tag, returning to block S11 to add the current network tag to the inner-layer message to obtain a modified inner-layer message. If yes, block 309 ends.

For example, since the current network tag 10 is not the last first network tag in the first information mapping table, the intermediate node P2 traverses a first network tag 20 immediately after the current network tag 10 in the first information mapping table as the current network tag. The intermediate node P2 modifies a first network tag 10 in an inner-layer message 3 (a message returned by the security device is named as the third inner-layer message) to the first network tag 20 to obtain a modified inner-layer message 4 (a message sent to the security device is named as the second inner-layer message), modifies a source MAC address of the inner-layer message 4 to the MAC address of the intermediate node P2, and modifies a destination MAC address of the inner-layer message 4 to an MAC address of the DDoS security device 1 corresponding to the first network tag 20.

The intermediate node P2 sends the inner-layer message 4 to the DDoS security device 1. If the intermediate node P2 receives an inner-layer message 5 (i.e., the third inner-layer message) returned by the DDoS security device 1, the intermediate node P2 traverses the first network tag 30 immediately after the current network tag 20 from the first information mapping table as the current network tag, modifies the first network tag 20 in the inner-layer message 5 to the first network tag 30 to obtain a modified inner-layer message 6 (i.e., the second inner-layer message), and modifies a destination MAC address of the inner-layer message 6 into an MAC address of the IPS security device 1 corresponding to the first network tag 30.

The intermediate node P2 sends the inner-layer message 6 to the IPS security device 1. If the intermediate node P2 receives an inner-layer message 7 (i.e., the third inner-layer message) returned by the IPS security device 1, the intermediate node P2 traverses a first network tag 40 immediately after the current network tag 30 from the first information mapping table as the current network tag, modifies the first network tag 30 in the inner-layer message 7 to the first network tag 40 to obtain a modified inner-layer message 8 (i.e., the second inner-layer message), and modifies a destination MAC address of the inner-layer message 8 into an MAC address of the WAF security device 1 corresponding to the first network tag 40.

The intermediate node P2 sends the inner-layer message 8 to the WAF security device 1. If the intermediate node P2 receives an inner-layer message 9 (i.e., the third inner-layer message) returned by the WAF security device 1, the current network tag 40 is the last first network tag in the first information mapping table, block 309 ends, and block 311 is executed.

In block 311, processing may be performed based on the inner-layer message 9 (i.e. the third inner-layer message), or a source MAC address of the inner-layer message 9 may be modified to the MAC address of the source node C1, and a destination MAC address of the inner-layer message 9 may be modified to the MAC address of the destination node S1, and the network tag in the inner-layer message 9 may be removed. The modified inner-layer message is the same as the above-mentioned first inner-layer message and is processed based on the first inner-layer message.

At block 310, the intermediate node P2 adds a second network tag to the first inner-layer message to obtain a fourth inner-layer message, and sends the fourth inner-layer message to the second security device, so that when the second security device receives the fourth inner-layer message, if the second network tag in the fourth inner-layer message is consistent with a network tag of the second security device, the security detection processing is performed on the fourth inner-layer message.

In an example, block 310 may be implemented by the following blocks.

At block S21, the intermediate node P2 sequentially traverses each second network tag in the second information mapping table. For a current network tag being traversed, the current network tag is added to the first inner-layer message to obtain a fourth inner-layer message.

The second information mapping table includes the corresponding relationship between the IP address information (such as the destination IP address and/or the source IP address) of the inner-layer message and the second network tag 50, the second network tag 20, the second network tag 30 and the second network tag 40. The intermediate node P2 traverses the second network tag 50 from the second information mapping table as the current network tag, and adds the second network tag 50 to the first inner-layer message to obtain the fourth inner-layer message.

At block S22, the intermediate node P2 sends the fourth inner-layer message to a second security device corresponding to the current network tag, for example, the fourth inner-layer message is sent to the Firewall security device 2.

At block S23, when the Firewall security device 2 receives the fourth inner-layer message, if the second network tag 50 in the fourth inner-layer message is consistent with a network tag of the Firewall security device 2, the Firewall security device 2 performs security detection processing on the fourth inner-layer message. Or, if the second network tag 50 in the fourth inner-layer message is inconsistent with the network tag of the Firewall security device 2, the fourth inner-layer message is discarded.

At block S24: if a security detection processing result of the fourth inner-layer message is safe, the Firewall security device 2 sends a fifth inner-layer message to the intermediate node P2. Or, if the security detection processing result of the fourth inner-layer message is unsafe, the Firewall security device 1 discards the fourth inner-layer message, i.e., does not send the inner-layer message to the intermediate node P2.

At block S25: if the intermediate node P2 does not receive the inner-layer message returned by the Firewall security device 2, the message transmission flow is ended. Or, if the intermediate node P2 receives the fifth inner-layer message returned by the Firewall security device 2, the intermediate node P2 obtains the IP address information and the second network tag 50 from the fifth inner-layer message.

At block S26, the intermediate node P2 queries the second information mapping table corresponding to the IP address information, and determines the second network tag 50 as the current network tag. The intermediate node P2 determines whether the current network tag is the last second network tag in the second information mapping table. If not, a second network tag immediately after the current network tag in the second information mapping table is traversed as the current network tag, returning to block S21 to add the current network tag to the inner-layer message to obtain a fourth inner-layer message. If yes, block 310 ends.

For example, the intermediate node P2 traverses the second network tag 20 from the second information mapping table as the current network tag, modifies the second network tag 50 in the inner-layer message to the second network tag 20, and sends the inner-layer message to the DDoS security device 2. If the intermediate node P2 receives the inner-layer message returned by the DDoS security device 2, the intermediate node P2 traverses the second network tag 30 as the current network tag from the second information mapping table, modifies the second network tag 20 in the inner-layer message to the second network tag 30, and sends the inner-layer message to the IPS security device 2. If the intermediate node P2 receives the inner-layer message returned by the IPS security device 2, the intermediate node P2 traverses the second network tag 40 as the current network tag from the second information mapping table, modifies the second network tag 30 in the inner-layer message to the second network tag 40, and sends the inner-layer message to the WAF security device 2. If the intermediate node P2 receives the inner-layer message returned by the WAF security device 2, the intermediate node P2 ends block 310 and executes block 311.

At block 311, the intermediate node P2 encapsulates the segment routing header for the inner-layer message, removes the main path and backup path in the segment routing header, and modifies the routing type field in the segment routing header from the first value to the second value (the second value indicates the routing type of the segment routing) to obtain a second data message.

In an example, after receiving the third inner-layer message returned by the last first security device in the main path (or the fifth inner-layer message returned by the last second security device in the backup path), the intermediate node P2 encapsulates a segment routing header for the third inner-layer message, and the segment routing header is a cached segment routing header. Or, the network tag in the third inner-layer message may be removed to obtain the first inner-layer message, and the segment routing header may be encapsulated for the first inner-layer message.

Since the segment routing header includes the main path and the backup path, the intermediate node P2 may further remove the main path and the backup path in the segment routing header. Based on this, the segment routing list of the segment routing header does not include the main path and the backup path, as shown in the segment routing header in FIG. 4.

Since the routing type field (Routing Type) in the segment routing header is a first value (e.g., 253), and the first value indicates a routing type of combined segment routing and network tag, the intermediate node P2 may further modify the routing type field in the segment routing header to a second value (e.g., 4).

At block 312, the intermediate node P2 sends the second data message based on a segment routing header of the second data message. For example, the intermediate node P2 sends the second data message to the tail-end node P8.

After receiving the second data message, the tail-end node P8 may remove the segment routing header of the second data message to obtain the inner-layer message in the second data message, and send the inner-layer message to the destination node S1. At this point, the data message is successfully sent to the destination node S1, and the transmission process of the data message is completed.

It can be seen from the above technical solution that a network tag is obtained by querying the tag mapping table through the device information, and the network tag is added to an inner-layer message, so that the modified inner-layer message is sent to the security device by combining the segment routing and the network tag, to cause the security device to perform security detection processing on the data message, thereby providing security service for the data message, transmitting the data message in the network after security detection processing, so as to avoid potential security risks to the network. Combined with segment routing and network tag, the dynamic and efficient path control of multiple security devices is realized, and unified path control and management are realized. The path sequence of security devices may be flexibly configured and adjusted according to different network security requirements. It may avoid redundant data message conversion and forwarding, and improve network transmission efficiency and processing capacity. Combining the network tag (such as VLAN/VXLAN tag) with the extensible segment routing header (ESRH) field of SRv6 routing, dynamic and efficient path control for multiple security devices is achieved, implementing an SRv6-based path control method combined with the ESRH.

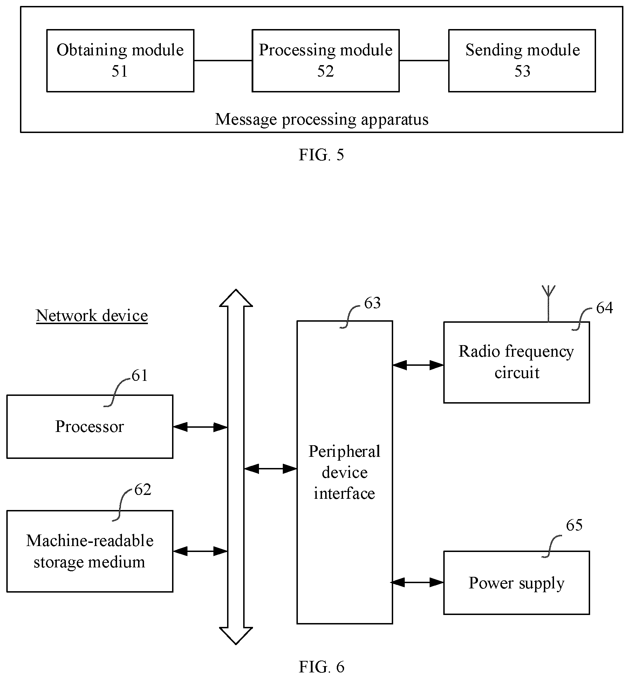

Based on the same application concept, an example of the present disclosure provides a message processing apparatus, which is applied to a network device. As shown in FIG. 5, which illustrates a structural schematic of the apparatus, the apparatus includes:
an obtaining module 51, to obtain a first data message, where the first data message includes a segment routing header and a first inner-layer message, the segment routing header includes a main path, and the main path includes first device information of a first security device corresponding to a security detection required by the first data message; and obtain a first network tag corresponding to the first device information included in the main path;
a processing module 52, to send, based on the first network tag, a second inner-layer message corresponding to the first inner-layer message to the first security device, to cause the first security device to perform a security detection processing on the received second inner-layer message based on the first network tag; and obtain, in response to receiving a third inner-layer message returned by the last first security device in the main path, a second data message by encapsulating, based on the third inner-layer message, a segment routing header from which the main path is removed; and a sending module 53, to send the second data message based on a segment routing header of the second data message.

In an example, in a case that the main path includes first device information of a plurality of first security devices, the processing module 52, when sending, based on the first network tag, a second inner-layer message corresponding to the first inner-layer message to the first security device, is specifically to:
obtain a first information mapping table corresponding to the main path, where the first information mapping table includes first network tags corresponding to the first device information of the plurality of first security devices;
sequentially traverse each first network tag in the first information mapping table; and
for a current network tag being traversed, obtain a second inner-layer message by adding the current network tag to the first inner-layer message, send the second inner-layer message to the first security device;
determine, in response to receiving a third inner-layer message returned by the first security device, whether a network tag in the third inner-layer message is the last first network tag in the first information mapping table;
traverse, in response to determining that the network tag in the third inner-layer message is not the last first network tag in the first information mapping table, a first network tag immediately after the network tag in the third inner-layer message from the first information mapping table as the current network tag, and return to an operation of the obtaining a second inner-layer message by adding the current network tag to the first inner-layer message.

In an example, the obtaining module 51 is further to parse a routing type field from the segment routing header; and obtain, in response to determining that the routing type field is a first value, the first device information included in the main path from the segment routing header, where the first value indicates a route type of combined segment routing and network tag; and
the processing module 52, after encapsulating, based on the third inner-layer message, a segment routing header from which the main path is removed, is further to modify the routing type field in the segment routing header from the first value to a second value, where the second value indicates a routing type of segment routing.

In an example, the segment routing header further includes a backup path, and the backup path includes second device information of a second security device corresponding to the security detection required by the first data message; and the processing module, before obtaining the first network tag corresponding to the first device information included in the main path, is further to determine whether the main path is available;
the obtaining module 51 is further to obtain, in response to determining that the main path is not available and the backup path is available, a second network tag corresponding to the second device information included in the backup path; and
the processing module 52 is further to send, based on the second network tag, a fourth inner-layer message corresponding to the first inner-layer message to the second security device, to cause the second security device to perform the security detection processing on the received fourth inner-layer message based on the second network tag; and obtain, in response to receiving a fifth inner-layer message returned by the last second security device in the backup path, the second data message by encapsulating, based on the fifth inner-layer message, a segment routing header from which the main path and the backup path are removed.

In an example, the processing module 52, when determining whether the main path is available, is specifically to: determine, in response to determining that an available state of each first security device in the main path meets a set condition, that the main path is available; where, for each first security device, the processing module, when determining that the available state of the first security device meets the set condition, is specifically to:
obtain a link state of the first security device, and in a case that the link state is reachable, determine that the available state of the first security device meets the set condition, or in a case that the link state is unreachable, determine that the available state of the first security device does not meet the set condition;
or, obtain a routing type identifier of the first security device, and in a case that the routing type identifier is a first value, determine that the available state of the first security device meets the set condition, or in a case that the routing type is a second value, determine that the available state of the first security device does not meet the set condition, where the first value indicates a route type of combined segment routing and network tag, and the second value indicates a route type of segment routing;
or, obtain a link state and a routing type identifier of the first security device, and in a case that the link state is reachable and the routing type identifier is a first value, determine that the available state of the first security device meets the set condition, or in a case that the link state is unreachable and/or the routing type identifier is a second value, determine that the available state of the first security device does not meet the set condition.

In an example, in response to determining that the network device is a head-end node, the obtaining module 51 is further to obtain a third data message, where the third data message includes a segment routing header and a first inner-layer message;
the processing module 52 is further to determine a target routing type corresponding to internet protocol (IP) address information of the first inner-layer message, and obtain, in response to determining that the target routing type is a route type of combined segment routing and network tag, the main path and the backup path corresponding to the IP address information; obtain the first data message by adding the main path and the backup path in the segment routing header of the third data message and modifying a routing type field in the segment routing header to a first value; and
the sending module 53 is further to send the first data message to the intermediate node.

Based on the same application concept as the above method, a network device is proposed in an example of the present disclosure. As shown in FIG. 6, the network device includes a processor 61 and a machine-readable storage medium 62, where the machine-readable storage medium 62 stores machine-executable instructions that can be executed by the processor 61, and the processor 61 is to execute machine-executable instructions to realize the message processing method disclosed in the above examples of the present disclosure.

In an example, the processor 61 may include one or more processing cores, such as a 4-core processor, an 8-core processor, etc. The processor 61 may be implemented in at least one hardware form of digital signal processing (DSP), field-programmable gate array (FPGA) and programmable logic array (PLA).

The processor 61 may also include a main processor and a co-processor. The main processor is a processor for processing data in an awake state, also named as a central processing unit (CPU). The co-processor is a low-power processor for processing data in a standby state.

In some examples, the processor 61 may be integrated with a graphics processing unit (GPU), and the GPU is responsible for rendering and drawing contents to be displayed on a display screen.

In an example, the network device further optionally includes a peripheral device interface 63 and at least one peripheral device. The processor 61 and the peripheral device interface 63 may be connected by a bus or a signal line. Each peripheral may be connected to the peripheral device interface 63 via a bus, a signal line or a circuit board. For example, the peripheral device may include: at least one of a radio frequency circuit 64 and a power supply 65.

The radio frequency circuit 64 is to receive and transmit radio frequency (RF) signals, also named as electromagnetic signals. The radio frequency circuit 64 communicates with the communication network and other communication devices via electromagnetic signals. The radio frequency circuit 64 converts electrical signals into electromagnetic signals for transmission, or, converts received electromagnetic signals to electrical signals. In some examples, the radio frequency circuit 64 may include: an antenna system, an RF transceiver, one or more amplifiers, a tuner, an oscillator, a digital signal processor, a user identity module card, and the like.

The radio frequency circuit 64 may communicate with a user equipment via at least one wireless communication protocol. The wireless communication protocols include, but are not limited to: World Wide Web, metropolitan area network, intranet, various generations of mobile communication networks (2G, 3G, 4G, and 5G), wireless local area networks, and/or wireless fidelity (WiFi) networks.

The power supply 65 is to supply power to various components in the electronic device. The power supply 65 may be alternating current, direct current, disposable battery or rechargeable battery, and the type of the power supply 65 is not limited.

Based on the same application concept as the above method, an example of the present disclosure further provides a machine-readable storage medium, the machine-readable storage medium having stored thereon a number of computer instructions, the computer instructions, when executed by a processor, being capable of realizing the message processing method disclosed in the above examples of the present disclosure.

The machine-readable storage medium may be any electronic, magnetic, optical or other physical storage apparatus, and may contain or store information, such as executable instructions, data, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., an optical disk, a dvd, etc.), or the like, or a combination thereof.

Based on the same application concept as the above methods, an example of the present disclosure further provides a computer program product, including a computer program, which, when executed by a processor, realizes the above message processing method.

It should be understood by those skilled in the art that examples of the present disclosure may be provided as a method, a system, or a computer program product. Therefore, the present disclosure may take the form of an entirely hardware example, an entirely software example, or an example combining software and hardware aspects. Moreover, examples of the present disclosure may take the form of a computer program product implemented on one or more computer-usable storage media (including but not limited to disk storage, CD-ROM, optical storage, etc.) containing computer-usable program codes.

The above is only examples of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A message processing method, performed by a network device and comprising:
obtaining a first data message, wherein the first data message comprises a segment routing header and a first inner-layer message, the segment routing header comprises a main path, and the main path comprises first device information of a first security device corresponding to a security detection required by the first data message;
obtaining a first network tag corresponding to the first device information included in the main path;
sending, based on the first network tag, a second inner-layer message corresponding to the first inner-layer message to the first security device, to cause the first security device to perform a security detection processing on the received second inner-layer message based on the first network tag;
obtaining, in response to receiving a third inner-layer message returned by the last first security device in the main path, a second data message by encapsulating, based on the third inner-layer message, a segment routing header from which the main path is removed; and
sending the second data message based on a segment routing header of the second data message.

2. The method according to claim 1, wherein in a case that the main path comprises first device information of a plurality of first security devices, the sending, based on the first network tag, a second inner-layer message corresponding to the first inner-layer message to the first security device comprises:
obtaining a first information mapping table corresponding to the main path, wherein the first information mapping table comprises first network tags corresponding to the first device information of the plurality of first security devices;
sequentially traversing each first network tag in the first information mapping table, and for a current network tag being traversed,
obtaining a second inner-layer message by adding the current network tag to the first inner-layer message;
sending the second inner-layer message to the first security device;
determining, in response to receiving a third inner-layer message returned by the first security device, whether a network tag in the third inner-layer message is the last first network tag in the first information mapping table;
traversing, in response to determining that the network tag in the third inner-layer message is not the last first network tag in the first information mapping table, a first network tag immediately after the network tag in the third inner-layer message from the first information mapping table as the current network tag, and
returning to an operation of the obtaining a second inner-layer message by adding the current network tag to the first inner-layer message.

3. The method according to claim 2, wherein an order of the first network tags in the first information mapping table matches an order of multiple items of the first device information included in the main path.

4. The method according to claim 1, wherein
before obtaining the first network tag corresponding to the first device information included in the main path, the method further comprises:
parsing a routing type field from the segment routing header; and
obtaining, in response to determining that the routing type field is a first value, the first device information included in the main path from the segment routing header, wherein the first value indicates a route type of combined segment routing and network tag; and
after encapsulating, based on the third inner-layer message, a segment routing header from which the main path is removed, the method further comprises:
modifying the routing type field in the segment routing header from the first value to a second value, wherein the second value indicates a routing type of segment routing.

5. The method according to any one of claims 1 to 4,
wherein the segment routing header further comprises a backup path, and the backup path comprises second device information of a second security device corresponding to the security detection required by the first data message; and before obtaining the first network tag corresponding to the first device information included in the main path, the method further comprises:
determining whether the main path is available;
wherein the method further comprises:
obtaining, in response to determining that the main path is not available and the backup path is available, a second network tag corresponding to the second device information included in the backup path;
sending, based on the second network tag, a fourth inner-layer message corresponding to the first inner-layer message to the second security device, to cause the second security device to perform the security detection processing on the received fourth inner-layer message based on the second network tag;
obtaining, in response to receiving a fifth inner-layer message returned by the last second security device in the backup path, the second data message by encapsulating, based on the fifth inner-layer message, a segment routing header from which the main path and the backup path are removed.

6. The method according to claim 5, wherein the determining whether the main path is available comprises:
determining, in response to determining that an available state of each first security device in the main path meets a set condition, that the main path is available,
wherein, for each first security device, determining that the available state of the first security device meets the set condition comprises:
obtaining a link state of the first security device, and
in a case that the link state is reachable, determining that the available state of the first security device meets the set condition; or
in a case that the link state is unreachable, determining that the available state of the first security device does not meet the set condition;
or, obtaining a routing type identifier of the first security device, and
in a case that the routing type identifier is a first value, determining that the available state of the first security device meets the set condition, or
in a case that the routing type is a second value, determining that the available state of the first security device does not meet the set condition,
wherein the first value indicates a route type of combined segment routing and network tag, and the second value indicates a route type of segment routing;
or, obtaining a link state and a routing type identifier of the first security device, and
in a case that the link state is reachable and the routing type identifier is a first value, determining that the available state of the first security device meets the set condition; or
in a case that the link state is unreachable or the routing type identifier is a second value or both, determining that the available state of the first security device does not meet the set condition.

7. The method according to claim 5,
wherein the segment routing header comprises a segment routing list, and the segment routing list comprises segment routing addresses of intermediate nodes between a head-end node and a tail-end node,
wherein the segment routing list further comprises the main path and the backup path, and both the main path and the backup path are located in front of the segment routing addresses.

8. The method according to claim 5, wherein, in a case that the network device is a head-end node, the method further comprises:
obtaining a third data message, wherein the third data message comprises a segment routing header and a first inner-layer message;
determining a target routing type corresponding to internet protocol, IP, address information of the first inner-layer message;
obtaining, in response to determining that the target routing type is a route type of combined segment routing and network tag, the main path and the backup path corresponding to the IP address information; and
obtaining the first data message by adding the main path and the backup path into the segment routing header of the third data message and modifying a routing type field in the segment routing header to a first value; and
sending the first data message to the intermediate node.

9. A message processing apparatus, applied to a network device and comprising:
an obtaining module, to obtain a first data message, wherein the first data message comprises a segment routing header and a first inner-layer message, the segment routing header comprises a main path, and the main path comprises first device information of a first security device corresponding to a security detection required by the first data message; and obtain a first network tag corresponding to the first device information included in the main path;
a processing module, to send, based on the first network tag, a second inner-layer message corresponding to the first inner-layer message to the first security device, to cause the first security device to perform a security detection processing on the received second inner-layer message based on the first network tag; and obtain, in response to receiving a third inner-layer message returned by the last first security device in the main path, a second data message by encapsulating, based on the third inner-layer message, a segment routing header from which the main path is removed; and
a sending module, to send the second data message based on a segment routing header of the second data message.

10. The apparatus according to claim 9, wherein in a case that the main path comprises first device information of a plurality of first security devices, the processing module, when sending, based on the first network tag, a second inner-layer message corresponding to the first inner-layer message to the first security device, is specifically to:
obtain a first information mapping table corresponding to the main path, wherein the first information mapping table comprises first network tags corresponding to the first device information of the plurality of first security devices;
sequentially traverse each first network tag in the first information mapping table; and
for a current network tag being traversed,
obtain a second inner-layer message by adding the current network tag to the first inner-layer message,
send the second inner-layer message to the first security device;
determine, in response to receiving a third inner-layer message returned by the first security device, whether a network tag in the third inner-layer message is the last first network tag in the first information mapping table;
traverse, in response to determining that the network tag in the third inner-layer message is not the last first network tag in the first information mapping table, a first network tag immediately after the network tag in the third inner-layer message from the first information mapping table as the current network tag, and
return to an operation of the obtaining a second inner-layer message by adding the current network tag to the first inner-layer message.

11. The apparatus according to claim 9, wherein the obtaining module is further to parse a routing type field from the segment routing header; and obtain, in response to determining that the routing type field is a first value, the first device information included in the main path from the segment routing header, wherein the first value indicates a route type of combined segment routing and network tag; and
the processing module, after encapsulating, based on the third inner-layer message, a segment routing header from which the main path is removed, is further to modify the routing type field in the segment routing header from the first value to a second value, wherein the second value indicates a routing type of segment routing.

12. The apparatus according to any one of claims 9 to 11, wherein the segment routing header further comprises a backup path, and the backup path comprises second device information of a second security device corresponding to the security detection required by the first data message; and the processing module, before obtaining the first network tag corresponding to the first device information included in the main path, is further to determine whether the main path is available;
the obtaining module is further to obtain, in response to determining that the main path is not available and the backup path is available, a second network tag corresponding to the second device information included in the backup path; and
the processing module is further to send, based on the second network tag, a fourth inner-layer message corresponding to the first inner-layer message to the second security device, to cause the second security device to perform the security detection processing on the received fourth inner-layer message based on the second network tag; and obtain, in response to receiving a fifth inner-layer message returned by the last second security device in the backup path, the second data message by encapsulating, based on the fifth inner-layer message, a segment routing header from which the main path and the backup path are removed.

13. The apparatus according to claim 12, wherein the processing module, when determining whether the main path is available, is specifically to: determine, in response to determining that an available state of each first security device in the main path meets a set condition, that the main path is available,
wherein, for each first security device, the processing module, when determining that the available state of the first security device meets the set condition, is specifically to:
obtain a link state of the first security device; and
in a case that the link state is reachable, determine that the available state of the first security device meets the set condition; or
in a case that the link state is unreachable, determine that the available state of the first security device does not meet the set condition;
or,
obtain a routing type identifier of the first security device, and
in a case that the routing type identifier is a first value, determine that the available state of the first security device meets the set condition, or
in a case that the routing type is a second value, determine that the available state of the first security device does not meet the set condition,
wherein the first value indicates a route type of combined segment routing and network tag, and the second value indicates a route type of segment routing; or,
obtain a link state and a routing type identifier of the first security device, and
in a case that the link state is reachable and the routing type identifier is a first value, determine that the available state of the first security device meets the set condition, or
in a case that the link state is unreachable or the routing type identifier is a second value or both, determine that the available state of the first security device does not meet the set condition.

14. The apparatus according to claim 12, wherein in a case that the network device is a head-end node, the obtaining module is further to obtain a third data message, wherein the third data message comprises a segment routing header and a first inner-layer message;
the processing module is further to determine a target routing type corresponding to internet protocol, IP, address information of the first inner-layer message, and obtain, in response to determining that the target routing type is a route type of combined segment routing and network tag, the main path and the backup path corresponding to the IP address information; obtain the first data message by adding the main path and the backup path into the segment routing header of the third data message and modifying a routing type field in the segment routing header to a first value; and
the sending module is further to send the first data message to the intermediate node.

15. A network device, comprising a processor and a machine-readable storage medium, wherein the machine-readable storage medium stores machine-executable instructions executable by the processor, and the processor is to execute the machine-executable instructions to implement the method according to any one of claims 1 to 8.
